# EUROPEAN PATENT SPECIFICATION

(11) **EP 4 426 794 B1**
(45) Date of publication and mention of the grant of the patent: **31.12.2025**
(21) Application number: 22813501.8
(22) Date of filing: 02.11.2022
(51) Int. Cl.: C09K 17/02, C05D 9/02, A01N 59/02

(54) **AGRICULTURAL USE FOR THE REDUCTION OF REDOX POTENTIAL IN PLANT TISSUE**
LANDWIRTSCHAFTLICHE VERWENDUNG ZUR REDUKTION DES REDOXPOTENTIALS IIN PFLANZENGEWEBE
UTILISATION AGRICOLES DE REDUCTION DU POTENTIEL REDOX DANS DES TISSUS VÉGÉTAUX

(30) Priority: 02.11.2021 EP 21205868
(43) Date of publication of application: 11.09.2024
(73) Proprietor: Tessenderlo Group NV, 1050 Brussels (BE)
(72) Inventor: MUTEAU, Régis, 1050 Brussels (BE); DE BAUW, Pieterjan, 1050 Brussels (BE); TOMASI, Isabella, 1050 Brussels (BE)
(74) Representative: Nederlandsch Octrooibureau
(86) International application number: PCT/EP2022/080560
(87) International publication number: WO 2023/078935

(56) References cited:
- US-B2- 8 545 591
- KUMAR U ET AL: "Nitrous oxide emission from different fertilizers and its mitigationby nitrification inhibitors in irrigated rice", vol. 32, 2 October 2000 (2000-10-02), pages 474 - 478, XP055909112, Retrieved from the Internet <URL:https://link.springer.com/content/pdf/10.1007/s003740000278.pdf>
- RATH ARUN KUMAR ET AL: "Effect of application of ammonium thiosulphate on production and emission of methane in a tropical rice soil", AGRICULTURE, ECOSYSTEMS & ENVIRONMENT, 19 April 2002 (2002-04-19), Amsterdam, pages 319 - 325, XP055909074, Retrieved from the Internet <URL:https://www.sciencedirect.com/science/article/pii/S0167880902000312?via%3Dihub> [retrieved on 20220405], DOI: 10.1016/S0167-8809(02)00031-2
- BERNDT W.L. ET AL: "Elemental Sulfur Lowers Redox Potential and Produces Sulfide in Putting Green Sand", HORTSCIENCE, vol. 27, no. 11, 1 November 1992 (1992-11-01), US, pages 1188 - 1190, XP055909097, ISSN: 0018-5345, DOI: 10.21273/HORTSCI.27.11.1188
- ROSTAMI FATEMEH ET AL: "The effect of silver thiosulfate (STS) on chlorophyll content and theantioxidant enzymes activity of potato (Solanum tuberosum L.)", JOURNAL OF CELL AND MOLECULAR RESEARCH, vol. 2, no. 1, 30 December 2010 (2010-12-30), pages 29 - 34, XP055909223
- SALEM NIDÁ M. ET AL: "Green synthesis of sulfur nanoparticles using Punica granatum peels and the effects on the growth of tomato by foliar spray applications", ENVIRONMENTAL NANOTECHNOLOGY, MONITORING & MANAGEMENT, vol. 6, 2 August 2016 (2016-08-02), pages 83 - 87, XP093014145, ISSN: 2215-1532, DOI: 10.1016/j.enmm.2016.06.006

## Description

### Field of the invention

The present invention relates to a use of a sulfur fertilizer for decreasing the redox potential of plant tissue.

### Background of the invention

Soil management strategies in agriculture have traditionally focused on regulation of pH, soil salinity, water content, adequate provision of macronutrients and, in the past decades, micronutrients. Despite the fact that oxidation-reduction reactions are essential for the maintenance of all living organisms, management of soil or plant tissue redox potential (Eh) has received little attention in agronomy.

Only very recently has the importance of the redox potential (Eh) started gaining traction in agronomy, see e.g. Husson, Olivier. "Redox potential (Eh) and pH as drivers of soil/plant/microorganism systems: a transdisciplinary overview pointing to integrative opportunities for agronomy." Plant and Soil 362.1 (2013): 389-417. KUMAR U ET AL: "Nitrous oxide emission from different fertilizers and its mitigationby nitrification inhibitors in irrigated rice",BIOL FERTIL SOILS, vol. 32 2 October 2000 (2000-10-02), pages 474-478 and Rath Arun Kumar ET AL: "Effect of application of ammonium thiosulphate on production and emission of methane in a tropical rice soil", Agriculture, Ecosystems & Environment, 19 April 2002 (2002-04-19), pages 319-325 both disclose reducing the redox potential of soil by application of thiosulfate.

Since the redox potential (Eh) influences many factors which affect plant performance, such as nutrient availability, plant stress tolerance, etc., the present inventors believe proper redox potential (Eh) management can increase plant performance. However, as the impact of most compounds on soil and/or plant redox potential is largely unknown there is a major challenge for agronomists to develop the theoretical framework of redox potential (Eh) management into sound agricultural practices. Hence, there is a need for improved agricultural soil management strategies which allow a grower to control, modulate or change the redox potential of the soil and/or plant.

It is an object of the present invention to provide a use for reducing the redox potential in plant.

### Summary of the invention

The present invention provides the use of a sulfur fertilizer selected from the group consisting of thiosulfates, polysulfides, (bi)sulfides, (bi)sulfites, metabisulfites, dithionites, elemental sulfur and combinations thereof for decreasing the redox potential of plant tissue, preferably comprising application of the sulfur fertilizer to soil and/or foliage.

As is shown in the appended examples, the present inventors have surprisingly found that these compounds, which contain a so-called 'reducing sulfur' are capable of significantly influencing the soil redox potential (Eh) when applied at regular agronomical rates. Conversely, when applying sulfate at the same sulfur rates, no change in soil redox potential (Eh) is detected.

This is particularly surprising when considering the following. The thiosulfate S₂O₃²⁻ ion's standard electrode potential E⁰ is -0.08 V (oxidation to tetrathionate) while the sulfate SO₄²⁻ ion's standard electrode potential E⁰ is +0.17 V (reduction to SO₂). The two sulfur atoms in thiosulfate are not equivalent, having different oxidation states (theoretically +6 and -2, however experimentally indicated rather to be +5 and -1). The sulfate and thiosulfate are employed at the same sulfur rate in the appended examples. This means that the thiosulfate treatment is effectively only providing half the applied sulfur amount as a reducing type of sulfur. In summary, it is remarkable that such a large and significant reduction of overall soil redox potential can be achieved while no change is observed for sulfate treatments despite
(i) the lower absolute value of the standard electrode potential (and thus the lower susceptibility to undergo a redox reaction) of thiosulfate oxidation compared to sulfate reduction;
(ii) the 50% lower concentration of reducing sulfur present in the thiosulfate treatments compared to the concentration of oxidizing sulfur present in the sulfate treatments; and
(iii) competition of oxidation reaction from the sulfate-type sulfur in the thiosulfate ion (this reaction having a standard electrode potential E⁰ of +0.6 V).

Furthermore, the methods and uses of the application described herein which are directed at decreasing the redox potential of plant tissue by foliar application of the sulfur fertilizer constitute a particularly surprising contribution to the art. The soil application of fertilizers like the sulfur fertilizers of the invention is significantly different from foliar application. In soil application of fertilizers, the fertilizers are influenced by the rhizosphere microbiome before root uptake. It is generally assumed that thiosulfate is converted to sulfate before it is absorbed by the plant roots. The present inventors do not wish to be bound by any theory on which soil mechanisms give rise to the redox potential modulating effect observed when applying the sulfur fertilizers described herein to soil. However, it has effectively been found that the sulfur fertilizers employed in the present methods and uses are capable of being absorbed by leaf tissue in a redox active form, thereby decreasing the plant tissue redox potential, even in the absence of any soil effects like the rhizosphere microbiome influence.

The inventors have further found that pH of neither soil or plant tissue is not significantly reduced or negatively impacted by the methods and uses of the present invention.

The methods and uses of the present disclosure provide improved control over soil and/or plant tissue redox potential, which is useful for several purposes, such as for improving soil and/or plant health; for increasing plant biotic and/or abiotic stress resistance; for reducing oxidative stress in plants; for reducing nitrate leaching of soils; increasing nutrient availability in soils; and/or for increasing antioxidant content of plant tissue, preferably of edible plant tissue.

### Detailed description

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound, unless explicitly defined otherwise. Whenever reference is made herein to the concentration of a salt, this includes the weight of any solvated molecules (in particular water of hydration) if the compound is provided in the form of a solvate (in particular hydrate).

The expression "thiosulfates" as used herein refers to the salts of thiosulfuric acid, which consist of one or more cations combined with a thiosulfate (S₂O₃²⁻) anion.

The expression "polysulfides" as used herein may refer to organic or inorganic polysulfides, but preferably refers to inorganic polysulfides, which consist of one or more cations combined with a polysulfide (Sₓ²⁻) anion.

The expression "(bi)sulfides" as used herein refers to the salts of H₂S, which consist of one or more cations combined with a sulfide (S²⁻) and/or a bisulfide (HS⁻) anion.

The expression "(bi)sulfites" as used herein refers to the salts of sulfurous acid, which consist of one or more cations combined with a sulfite (SO₃²⁻) and/or a bisulfite (HSO₃⁻) anion.

The expression "metabisulfites" as used herein refers to salts which consist of one or more cations combined with a metabisulfite (S₂O₅²⁻) anion.

The expression "dithionites" as used herein refers to salts which consist of one or more cations combined with a dithionite (S₂O₄²⁻) anion.

The expression "elemental sulfur" as used herein refers to compounds consisting of sulfur in oxidation state 0, typically in the form of S₈ molecules.

The redox potential of soil as referred to herein concerns the redox potential as determined by the method described in steps 1-10 of section 3.2.1 on page 104 of Husson, Olivier, et al. "Practical improvements in soil redox potential (Eh) measurement for characterisation of soil properties. Application for comparison of conventional and conservation agriculture cropping systems." Analytica chimica acta 906 (2016): 98-109, which is incorporated herein by reference. Preferably, the redox potential of soil referred to herein is determined at 24 hours after application of the sulfur fertilizer. Preferably the redox potential of soil referred to herein is determined at 20 cm depth.

The redox potential of plant tissue as referred to herein concerns the redox potential as determined by collecting plant leaves, subjecting the leaves to manual pressing to collect liquid from the leaves, and determining the redox potential of the leaves liquid. Preferably, the redox potential of plant tissue referred to herein is determined at 15 minutes after application of the sulfur fertilizer or at 24 hours after application of the sulfur fertilizer. In another embodiment the redox potential of plant tissue referred to herein is determined at 1 hour after application of the sulfur fertilizer.

The expression "decreasing the redox potential of soil and/or plant tissue" as used herein should be construed to mean that the redox potential of soil and/or plant tissue is decreased compared to its redox potential before application of the sulfur fertilizer.

Soil pH as referred to herein is preferably determined according to ISO 10390:2021 employing a 1:3 (volume fraction) suspension of soil in water.

As will be understood by the skilled person, when reference is made throughout this document to the amount of the sulfur fertilizer, in case the sulfur fertilizer is provided as an ionic compound (i.e. as a sulfur fertilizer selected from thiosulfates, polysulfides, (bi)sulfides, (bi)sulfites, metabisulfites or dithionites) this refers to the amount inclusive of the counterion for the thiosulfates, polysulfides, (bi)sulfides, (bi)sulfites, metabisulfites, or dithionites, unless specified otherwise.

Disclosed but not claimed is a method for decreasing the redox potential of soil and/or plant tissue comprising application of a sulfur fertilizer to soil and/or foliage, wherein the sulfur fertilizer is selected from the group consisting of thiosulfates, polysulfides, (bi)sulfides, (bi)sulfites, metabisulfites, dithionites, elemental sulfur and combinations thereof.

Disclosed but not claimed is a method for decreasing the redox potential of soil, preferably for decreasing the redox potential of soil by at least 30 mV, preferably by at least 50 mV, more preferably by at least 100 mV. The present inventors have found that such large effects can be achieved by the methods and uses of the present invention, even when employing regular agronomical sulfur rates. The present inventors have found that a too large decrease in soil redox potential may in some cases not be desirable because of unwanted side-effects for example phosphate leaching or plant toxicities. Hence, in some embodiments of the invention, the method is for decreasing the redox potential of soil by 30-200 mV, preferably by 50-150 mV.

Also disclosed but not claimed is a method for decreasing the redox potential of plant tissue, preferably for decreasing the redox potential of plant tissue by at least 20 mV, preferably by at least 40 mV. In some embodiments of the invention, the method is for decreasing the redox potential of plant tissue by 20-150 mV, preferably by 40-100 mV. As is shown in the appended examples, it was surprisingly found that even in case of soil application, in particular fertigation, the redox potential decrease observed in plant tissue is nearly instantaneous. Hence, the method is for decreasing the redox potential of plant tissue, preferably for decreasing the redox potential of plant tissue by at least 20 mV, preferably by at least 40 mV, the method comprising application of the sulfur fertilizer described herein elsewhere to soil, and the redox potential being determined at 15 minutes after application of the sulfur fertilizer. Plants having leaf tissue characterized by a pe + pH > 10.5 can be classified as stressed plants (having an oxidized apoplast, xylem and/or phloem), while plants having leaf tissue characterized by a pe + pH within the range of 7-10.5 can be classified as healthy plants. Hence, the method is for decreasing the redox potential of plant tissue, wherein the plant leaf tissue pe + pH is more than 10.5 before application of the sulfur fertilizer. It is further preferred that the plant leaf tissue pe + pH is within the range of 7-10.5 after application of the sulfur fertilizer when determined after application of the sulfur fertilizer. For foliar application, the effect is nearly instantaneous, such that in case of foliar application the plant leaf tissue pe + pH is preferably within the range of 7-10.5 when determined 15 minutes, 12 hours or 24 hours after application of the sulfur fertilizer. For soil application, the plant leaf tissue pe + pH is preferably within the range of 7-10.5 when determined 15 minutes, 24 hours or 72 hours after application of the sulfur fertilizer. Hence, the methods allow a stressed plant to be converted to a healthy plant by modulation of the redox potential.

In a variation of the method described herein, there is provided a method for decreasing the redox potential of plant tissue comprising application of the sulfur fertilizer described herein elsewhere to foliage. Such methods are preferably free of soil application of the sulfur fertilizer. The skilled person will understand that "free of soil application" should be interpreted to allow the unavoidable residual soil application which arises when applying the fertilizer to foliage by conventional methods like spraying, but excludes active soil application like fertigation or broadcasting. Preferably there is provided a method for decreasing the redox potential of plant tissue comprising application of the sulfur fertilizer described herein elsewhere to foliage, wherein the method is for decreasing the redox potential of plant tissue by at least 20 mV, preferably by at least 40 mV. In some embodiments of the invention, the method is for decreasing the redox potential of plant tissue by 20-150 mV, preferably by 40-100 mV. Plants having leaf tissue characterized by a pe + pH > 10.5 can be classified as stressed plants (having an oxidized apoplast, xylem and/or phloem), while plants having leaf tissue characterized by a pe + pH within the range of 7-10.5 can be classified as healthy plants. Hence, there is provided a method for decreasing the redox potential of plant tissue comprising application of the sulfur fertilizer described herein elsewhere to foliage, wherein the plant leaf tissue pe + pH is more than 10.5 before application of the sulfur fertilizer. It is further preferred that the plant leaf tissue pe + pH is within the range of 7-10.5 after application of the sulfur fertilizer when determined after application of the sulfur fertilizer. For foliar application, the effect is nearly instantaneous, such that in case of foliar application the plant leaf tissue pe + pH is preferably within the range of 7-10.5 when determined 15 minutes, 12 hours or 24 hours after application of the sulfur fertilizer. Hence, the methods allow a stressed plant to be converted to a healthy plant by modulation of the redox potential.

The present inventors have found that the pH of the soil is not further reduced when applying the methods and uses disclosed herein compared to a control, in particular the pH of the soil is not reduced when determined at 24 hours after application of the sulfur fertilizer. Hence, the method is for decreasing the redox potential of soil and/or plant tissue while the pH of the soil and/or the plant tissue is not significantly reduced compared to a control, preferably while the pH is increased compared to a control, more preferably while the pH is increased by at least 0.5 pH units compared to a control. In such variations the pH is preferably determined at 24 hours after application and the control does not comprise application of the sulfur fertilizer but is otherwise submitted to identical treatment. In preferred variations, the method is for decreasing the redox potential of soil while the pH of the soil is not reduced compared to a control, preferably while the pH is increased compared to a control, more preferably while the pH is increased by at least 0.5 pH units compared to a control. In such variations the pH is preferably determined at 24 hours after application and the control does not comprise application of the sulfur fertilizer but is otherwise submitted to identical treatment.

As will be understood by the skilled person, in accordance with the preferred variations described herein, disclosed but not claimed are the methods described herein wherein:
- the method is for decreasing the redox potential of soil, preferably for decreasing the redox potential of soil by at least 50 mV, preferably by at least 100 mV; and wherein
- the method is for decreasing the redox potential of soil while the pH of the soil is not reduced, preferably while the pH is increased, more preferably while the pH is increased by at least 0.5 pH units.

Furthermore, as is shown in the appended examples, the present inventors have found that the decrease of soil redox potential persists throughout a prolonged period of time, which is beneficial as it allows the plant to develop for sustained periods of time under optimal conditions, and it allows considerably flexibility in the timing of the application of the sulfur fertilizer throughout the planting and growing seasons. Hence, in preferred variations a method is provided wherein the soil redox potential remains decreased for at least 1 week after application of the sulfur fertilizer, preferably for at least 2 weeks, more preferably for at least 3 weeks.

Also disclosed but not claimed is a method for
- improving soil and/or plant health;
- increasing plant biotic and/or abiotic stress resistance;
- reducing oxidative stress in plants;
- reducing nitrate leaching of soils;
- increasing nutrient availability in soils; and/or
- increasing antioxidant content of plant tissue, preferably of edible plant tissue;
by decreasing the redox potential of soil and/or plant tissue according to the method for decreasing the redox potential of soil and/or plant tissue described above.

Also disclosed but not claimed is a method for increasing antioxidant content of plant tissue, preferably of edible plant tissue by application of a sulfur fertilizer to soil and/or foliage, preferably to soil, wherein the sulfur fertilizer is selected from the group consisting of thiosulfates, polysulfides, (bi)sulfides, (bi)sulfites, metabisulfites, dithionites, elemental sulfur and combinations thereof. In preferred variations of the method for increasing antioxidant content described herein, the antioxidant content is increased compared to an identical fertilization scheme utilizing sulfur fertilization in the form of sulfate instead of thiosulfates, polysulfides, (bi)sulfides, (bi)sulfites, metabisulfites, dithionites, elemental sulfur and combinations thereof. The present inventors have found that application of the sulfur fertilizers described herein results in an increased antioxidant content of plant tissue, for example plant fruits. Without wishing to be bound by any theory, the inventors believe this is due to (i) increased antioxidant production by the plant caused by a lower soil and/or plant tissue redox potential, i.e. a better growing environment, and/or (ii) reduced antioxidant consumption due to a lower soil and/or plant tissue redox potential. The methods and uses thus enable the provision of cereal products, fruit and/or vegetables for human consumption which have an increased antioxidant content and thus associated health benefits.

The invention provides the use of a sulfur fertilizer selected from the group consisting of thiosulfates, polysulfides, (bi)sulfides, (bi)sulfites, metabisulfites, dithionites, elemental sulfur and combinations thereof for decreasing the redox potential of plant tissue, preferably comprising application of the sulfur fertilizer to soil and/or foliage.

According to the invention, the use is for decreasing the redox potential of plant tissue, preferably for decreasing the redox potential of plant tissue by at least 20 mV, preferably by at least 40 mV. In some embodiments of the invention, the use is for decreasing the redox potential of plant tissue by 20-150 mV, preferably by 40-100 mV. As is shown in the appended examples, it was surprisingly found that even in case of soil application, in particular fertigation, the redox potential decrease observed in plant tissue is nearly instantaneous. Hence, in embodiments of the invention the use is for decreasing the redox potential of plant tissue, preferably for decreasing the redox potential of plant tissue by at least 20 mV, preferably by at least 40 mV, the use comprising application of the sulfur fertilizer described herein elsewhere to soil, and the redox potential being determined at 15 minutes after application of the sulfur fertilizer. Plants having leaf tissue characterized by a pe + pH > 10.5 can be classified as stressed plants (having an oxidized apoplast, xylem and/or phloem), while plants having leaf tissue characterized by a pe + pH within the range of 7-10.5 can be classified as healthy plants. Hence, in preferred embodiments of the invention, the use is for decreasing the redox potential of plant tissue, wherein the plant leaf tissue pe + pH is more than 10.5 before application of the sulfur fertilizer. It is further preferred that the plant leaf tissue pe + pH is within the range of 7-10.5 after application of the sulfur fertilizer when determined after application of the sulfur fertilizer. For foliar application, the effect is nearly instantaneous, such that in case of foliar application the plant leaf tissue pe + pH is preferably within the range of 7-10.5 when determined 15 minutes, 12 hours or 24 hours after application of the sulfur fertilizer. For soil application, the plant leaf tissue pe + pH is preferably within the range of 7-10.5 when determined 15 minutes, 24 hours, or 72 hours after application of the sulfur fertilizer. Hence, the use of the present invention allows a stressed plant to be converted to a healthy plant by modulation of the redox potential.

In highly preferred embodiments of the use described herein, there is provided the use of the sulfur fertilizer described herein elsewhere for decreasing the redox potential of plant tissue, said use comprising application of the sulfur fertilizer to foliage. Such use is preferably free of soil application of the sulfur fertilizer. The skilled person will understand that "free of soil application" should be interpreted to allow the unavoidable residual soil application which arises when applying the fertilizer to foliage by conventional methods like spraying, but excludes active soil application like fertigation or broadcasting Preferably there is provided the use of the sulfur fertilizer described herein elsewhere for decreasing the redox potential of plant tissue, said use comprising application of the sulfur fertilizer to foliage, wherein the use is for decreasing the redox potential of plant tissue by at least 20 mV, preferably by at least 40 mV. In some embodiments of the invention, the use is for decreasing the redox potential of plant tissue by 20-150 mV, preferably by 40-100 mV. Plants having leaf tissue characterized by a pe + pH > 10.5 can be classified as stressed plants (having an oxidized apoplast, xylem and/or phloem), while plants having leaf tissue characterized by a pe + pH within the range of 7-10.5 can be classified as healthy plants. Hence, in preferred embodiments of the invention, there is provided the use of the sulfur fertilizer described herein elsewhere for decreasing the redox potential of plant tissue, said use comprising application of the sulfur fertilizer to foliage, wherein the plant leaf tissue pe + pH is more than 10.5 before application of the sulfur fertilizer. It is further preferred that the plant leaf tissue pe + pH is within the range of 7-10.5 after application of the sulfur fertilizer when determined after application of the sulfur fertilizer. For foliar application, the effect is nearly instantaneous, such that in case of foliar application the plant leaf tissue pe + pH is preferably within the range of 7-10.5 when determined 12 hours after application of the sulfur fertilizer. Hence, the methods of the present invention allow a stressed plant to be converted to a healthy plant by modulation of the redox potential.

The present inventors have found that the pH of the soil is not further reduced when applying the methods and uses of the present invention compared to a control, in particular the pH of the soil is not reduced when determined at 24 hours after application of the sulfur fertilizer. Hence, in preferred embodiments of the invention, the use is for decreasing the redox potential of plant tissue while the pH of the soil and/or the plant tissue is not reduced compared to a control, preferably while the pH is increased compared to a control, more preferably while the pH is increased by at least 0.5 pH units compared to a control. In such embodiments the pH is preferably determined at 24 hours after application and the control does not comprise application of the sulfur fertilizer but is otherwise submitted to identical treatment.

Disclosed but not claimed are the uses described herein wherein
- the use is for decreasing the redox potential of soil, preferably for decreasing the redox potential of soil by at least 50 mV, preferably by at least 100 mV; and wherein
- the use is for decreasing the redox potential of soil while the pH of the soil is not reduced, preferably while the pH is increased, more preferably while the pH is increased by at least 0.5 pH units.

In preferred embodiments of the invention, the uses described herein are provided wherein the soil redox potential remains decreased for at least 1 week after application of the sulfur fertilizer, preferably for at least 2 weeks, more preferably for at least 3 weeks.

Also disclosed but not claimed is the use of a sulfur fertilizer selected from the group consisting of thiosulfates, polysulfides, (bi)sulfides, (bi)sulfites, metabisulfites, dithionites, elemental sulfur and combinations thereof for
- improving soil and/or plant health; and/or
- increasing plant biotic and/or abiotic stress resistance; and/or
- reducing oxidative stress in plants; and/or
- reducing nitrate leaching of soils; and/or
- increasing nutrient availability in soils; and/or
- increasing antioxidant content of plant tissue, preferably of edible plant tissue;
by decreasing the redox potential of soil and/or plant tissue, the use preferably comprising application of the sulfur fertilizer to soil and/or foliage.

Also disclosed but not claimed the use of a sulfur fertilizer selected from the group consisting of thiosulfates, polysulfides, (bi)sulfides, (bi)sulfites, metabisulfites, dithionites, elemental sulfur and combinations thereof for increasing antioxidant content of plant tissue, preferably of edible plant tissue. The use preferably comprises application of the sulfur fertilizer to soil and/or foliage, preferably to soil. In preferred variations of the uses for increasing antioxidant content described herein, the antioxidant content is increased compared to an identical fertilization scheme utilizing sulfur fertilization in the form of sulfate instead of thiosulfates, polysulfides, (bi)sulfides, (bi)sulfites, metabisulfites, dithionites, elemental sulfur and combinations thereof.

In the following, variations of *inter alia* the sulfur fertilizer, the soil type, etc. are described. It will be understood by the skilled person that these variations are explicitly applicable to each of the methods and uses described herein, and are only recited once merely for conciseness of the present description.

The methods and uses are preferably provided wherein the soil has a redox potential before application of the sulfur fertilizer of more than 400 mV, preferably of more than 500 mV, more preferably of more than 600 mV and/or a pH before application of the sulfur fertilizer outside the range of 6.5-7.5, preferably outside the range of 6-8. Preferably, the soil has a pH before application of the sulfur fertilizer of less than 6.5, preferably of less than 6, more preferably of less than 5.5.

Particularly suitable soils for the methods and uses are Histosols, Anthrosols, Technosols, Leptosols, Solonetz, Vertisols, Solonchacks, Andosols, Podsols, Plinthosols, Nitisols, Ferralsols, Chernozems, Kastanozems, Phaeozems, Umbrisols, Durisols, Gypsisols, Calcisols, Retisols, Acrisols, Lixisols, Alisols, Luvisols, Cambisols, Arenosols, Fluvisols, and Regosols, as these are expected to exhibit the largest benefit of the methods and uses Hence, in preferred variations, the soil is selected from Histosols, Anthrosols, Technosols, Leptosols, Solonetz, Vertisols, Solonchacks, Andosols, Podsols, Plinthosols, Nitisols, Ferralsols, Chernozems, Kastanozems, Phaeozems, Umbrisols, Durisols, Gypsisols, Calcisols, Retisols, Acrisols, Lixisols, Alisols, Luvisols, Cambisols, Arenosols, Fluvisols or Regosols according to WRB classification system, preferably selected from Solonchacks, Andosols, Podsols, Nitisols, Ferralsols, Gyspisols, Calcisols, Acrisols, Lixisols, Alisols, Luvisols, Cambisols or Arenosols according to the WRB classification system. As used herein, the term "WRB classification system" refers to the "update 2015 of the third edition 2014" of the World Reference Base for Soil Resources, which is a soil classification system administered by the International Union of Soil Sciences.

The methods and uses are preferably for concomitantly providing sulfur fertilization and reducing soil and/or plant redox potential, more preferably for concomitantly providing sulfur fertilization and reducing soil redox potential.

The methods and uses are preferably provided wherein the sulfur fertilizer is selected from the group consisting of thiosulfates, polysulfides, (bi)sulfides, (bi)sulfites, metabisulfites, dithionites, elemental sulfur and combinations thereof, and wherein the thiosulfates, polysulfides, (bi)sulfides, (bi)sulfites, metabisulfites, and dithionites are selected from salts wherein the cation is selected from the group consisting of Sodium (Na⁺), Potassium (K⁺), Magnesium (Mg²⁺), Manganese(I) (Mn⁺), Manganese(II) (Mn²⁺), Manganese(III) (Mn³⁺), Iron(II) (Fe²⁺); Iron(III) (Fe³⁺), Nickel(I) (Ni⁺), Nickel(ll) (Ni²⁺), Nickel(lll) (Ni³⁺), Calcium (Ca²⁺), Copper(I) (Cu⁺), Copper(II) (Cu²⁺), Copper(III) (Cu³⁺), Cobalt(I) (Co⁺), Cobalt(II) (Co²⁺), Cobalt(III) (Co³⁺), Zinc(I) (Zn⁺), Zinc(II) (Zn²⁺), Molybdenum(I) (Mo⁺), Molybdenum(II) (Mo²⁺), Molybdenum(lll) (Mo³⁺), compounds of formula (NRR'R"R‴)⁺, and combinations thereof, preferably the thiosulfates, polysulfides, (bi)sulfides, (bi)sulfites, metabisulfites, and dithionites are selected from salts wherein the cation is selected from the group consisting of Potassium (K⁺), Magnesium (Mg²⁺), Manganese(II) (Mn²⁺), Iron(II) (Fe²⁺), Nickel(II) (Ni²⁺), Calcium (Ca²⁺), Copper(ll) (Cu²⁺), Cobalt(II) (Co²⁺), Zinc(II) (Zn²⁺), Molybdenum(II) (Mo²⁺), compounds of formula (NRR'R"R‴)⁺, and combinations thereof;
wherein R, R', R" and R‴ are each independently selected from the group consisting of H, alkyls and alkenyls, preferably from the group consisting of H, methyl, ethyl and propyl, most preferably R, R', R" and R‴ are each H.

In accordance with highly preferred embodiments of the invention, the sulfur fertilizer is selected from thiosulfates and/or polysulfides, preferably thiosulfates.
More preferably, the sulfur fertilizer is selected from thiosulfates of formula (X)ₙ(S₂O₃)ₘ
wherein n and m are each and integer individually selected from 1, 2 and 3;
wherein X represents a cation selected from the group consisting of Sodium (Na⁺), Potassium (K⁺), Magnesium (Mg²⁺), Manganese(I) (Mn⁺), Manganese(II) (Mn²⁺), Manganese(III) (Mn³⁺), Iron(ll) (Fe²⁺); Iron(III) (Fe³⁺), Nickel(I) (Ni⁺), Nickel(II) (Ni²⁺), Nickel(III) (Ni³⁺), Calcium (Ca²⁺), Copper(I) (Cu⁺), Copper(II) (Cu²⁺), Copper(III) (Cu³⁺), Cobalt(I) (Co⁺), Cobalt(II) (Co²⁺), Cobalt(III) (Co³⁺), Zinc(I) (Zn⁺), Zinc(ll) (Zn²⁺), Molybdenum(I) (Mo⁺), Molybdenum(II) (Mo²⁺), Molybdenum(III) (Mo³⁺), compounds of formula (NRR'R"R‴)⁺, and combinations thereof, preferably wherein X represents a cation selected from the group consisting of Potassium (K⁺), Magnesium (Mg²⁺), Manganese(II) (Mn²⁺), Iron(ll) (Fe²⁺), Nickel(II) (Ni²⁺), Calcium (Ca²⁺), Copper(ll) (Cu²⁺), Cobalt(II) (Co²⁺), Zinc(II) (Zn²⁺), Molybdenum(II) (Mo²⁺), compounds of formula (NRR'R"R‴)⁺, and combinations thereof;
wherein n and m are such that the overall charge of formula (X)ₙ(S₂O₃)ₘ is zero;
wherein R, R', R" and R‴ are each independently selected from the group consisting of H, alkyls and alkenyls, preferably from the group consisting of H, methyl, ethyl and propyl, most preferably R, R', R" and R‴ are each H.
Most preferably the sulfur fertilizer is selected from calcium thiosulfate, potassium thiosulfate, ammonium thiosulfate and combinations thereof, such as potassium thiosulfate or ammonium thiosulfate.

The polysulfides are preferably selected from the group consisting of alkali metal polysulfides, ammonium polysulfides, alkaline earth metal polysulfides and combinations thereof. In some embodiments the polysulfides are alkali metal polysulfides corresponding to the average molecular formula M₂Sₓ, wherein M represents one or more alkali metal ions, preferably sodium and/or potassium and wherein x is equal to or greater than 2. Preferably, x is within the range of 3 to 5, more preferably within the range of 3.5 to 4.5. In some embodiments the polysulfides are alkaline earth metal polysulfides corresponding to the average molecular formula M'S_{y}, wherein M' represents one or more alkaline earth metal ions, preferably calcium and/or magnesium and wherein y is equal to or greater than 2. Preferably, y is within the range of 3.5 to 6, more preferably within the range of 4 to 5. Most preferably the polysulfides are selected from the group consisting of calcium polysulfides, potassium polysulfides, ammonium polysulfides and combinations thereof.

The (bi)sulfides are preferably selected from alkali metal sulfides, alkaline earth metal sulfides, alkali metal bisulfides, alkaline earth metal bisulfides, and combinations thereof, more preferably selected from the group of sodium sulfide, sodium bisulfide, calcium sulfide and/or calcium bisulfide.

The (bi)sulfites are preferably selected from alkali metal sulfides, alkaline earth metal sulfides, alkali metal bisulfides, alkaline earth metal bisulfides, and combinations thereof, more preferably selected from the group of sodium sulfide, sodium bisulfide, calcium sulfide and/or calcium bisulfide.

The metabisulfites are preferably selected from alkali metal sulfides, alkaline earth metal sulfides, alkali metal bisulfides, alkaline earth metal bisulfides, and combinations thereof, more preferably selected from the group of sodium sulfide, sodium bisulfide, calcium sulfide and/or calcium bisulfide.

The dithionites are preferably selected from alkali metal sulfides, alkaline earth metal sulfides, alkali metal bisulfides, alkaline earth metal bisulfides, and combinations thereof, more preferably selected from the group of sodium sulfide, sodium bisulfide, calcium sulfide and/or calcium bisulfide.

The elemental sulfur may be provided in any form, such as precipitated, sublimed, micronized or colloidal sulfur. Preferably the elemental sulfur has a particle size distribution such that more than 90 wt.% of the elemental sulfur particles pass through a 140 mesh (105 micron) screen, preferably through a 200 mesh (74 micron) screen. In particularly preferred embodiments, the sulfur is provided in the form of a particle comprising sulfur, and a swelling clay (such as bentonite). The particle preferably comprises 70-95wt.% (by total weight of the particle) sulfur and 5-30 wt.% (by total weight of the particle) swelling clay.

The present inventors have found that the concomitant application the sulfur fertilizer as described herein with urea results in a particularly advantageous combination of effects, namely concomitantly providing (i) sulfur fertilization, (ii) nitrogen fertilization, (iii) reduction of soil and/or plant redox potential and (iv) nitrogen stabilization through nitrification and/or urease inhibition. Thus, the methods and uses described herein are provided wherein the sulfur fertilizer described herein is applied in the form of a urea-sulfur composition comprising the sulfur fertilizer and urea.

In the following paragraphs, preferred urea-sulfur compositions are explained which are applicable to the methods and uses wherein the sulfur fertilizer is applied in the form of a composition comprising the sulfur fertilizer as described herein and urea (referred to herein as the "urea-sulfur composition").

The sulfur compound in the urea-sulfur compositions is as described herein before, i.e. it is selected from the group consisting of thiosulfates, polysulfides, (bi)sulfides, (bi)sulfites, metabisulfites, dithionites, elemental sulfur and combinations thereof. The preferred embodiments of the sulfur fertilizer described in the preceding paragraphs are equally applicable to the urea-sulfur composition. In particular, in the context of the urea-sulfur composition, the sulfur fertilizer is preferably selected from thiosulfates, polysulfides, and/or (bi)sulfites, preferably selected from thiosulfates. Said thiosulfates, polysulfides, and/or (bi)sulfites are preferably as described herein before. Most preferably, in the context of the urea-sulfur composition, the sulfur fertilizer is selected from calcium thiosulfate, potassium thiosulfate, ammonium thiosulfate and combinations thereof, in particular ammonium thiosulfate.

The urea-sulfur composition may be provided in the form of a liquid composition such as an aqueous solution or suspension comprising the urea and the sulfur compound. This is particularly preferred in case the in case the methods or uses described herein comprise application of the urea-sulfur composition to foliage, for example when it is applied via foliar spray.

Alternatively, the urea-sulfur composition may be provided in the form of a particulate solid. The type of particles is not particularly limited and can be, for example, a powder, granule, prill, pellet or pastille. In highly preferred embodiments, the sulfur fertilizer and the urea are comprised in the same particle (as opposed to e.g. a simple dry blend of sulfur fertilizer and urea). This has the additional advantage that the product is delivered as a "ready to use" product such that dosing mistakes are avoided and supply chain is simplified compared to on-site blending at the grower site. The invention is not particularly limited with regard to the location of the urea with respect to the sulfur fertilizer within the particle. Hence, the particle comprising the sulfur fertilizer and the urea can be any type of agglomerate (e.g. an optionally coated granule, pellet, prill, pastille, etc.) or coated powder. Preferably, the urea-sulfur composition is provided in the form of a particulate solid the sulfur fertilizer and the urea are comprised in the same particle and wherein the sulfur fertilizer and urea are homogenously distributed throughout the particle.

The urea-sulfur composition may optionally comprise further ingredients, such as one or more nitrogen stabilizers (e.g. N-(n-butyl)-thiophosphoric triamide (NBPT), phenylphosphorodiamidate (PPD), Dicyandiamide (DCD) and/or 2-chloro-6-(trichloromethyl)-pyridine (Nitrapyrin)), further fertilizers, urea production byproducts (e.g. urea-formaldehyde, biuret), etc. In some embodiments, the urea-sulfur composition is free of N-(n-butyl)-thiophosphoric triamide (NBPT), phenylphosphorodiamidate (PPD), Dicyandiamide (DCD) and 2-chloro-6-(trichloromethyl)-pyridine (Nitrapyrin), preferably free of any nitrification inhibitor or urease inhibitor other than the sulfur fertilizer.

The combined amount of the sulfur fertilizer and the urea in the urea-sulfur composition preferably is at least 90 wt.% (by dry weight of the urea-sulfur composition), more preferably at least 95 wt.% (by dry weight of the urea-sulfur composition), most preferably at least 96 wt.% (by dry weight of the urea-sulfur composition).

The ratio (w/w) of the sulfur fertilizer to the urea (determined based on the total of the urea-sulfur composition) is preferably within the range of 1:99 to 99:1, preferably within the range of 5:95 to 95:5, more preferably within the range of 10:90 to 90:10.

The methods and uses described herein preferably comprise application of the sulfur fertilizer to soil and/or foliage, preferably to soil, in an amount providing an amount of sulfur within the range of 0.2-600 kg S / hectare, preferably within the range of 2-100 kg S / hectare, more preferably within the range of 5-50 kg S / hectare, most preferably within the range of 10-40 kg S / hectare.

The application of the sulfur fertilizer to soil and/or foliage can take place at any time before, during or after the growing season. In case of annual crops it is preferred that the application takes place within 4 weeks prior to planting, such as about 2 weeks prior to planting.

The application of the sulfur fertilizer to soil and/or foliage can take place using any application method, such as broadcast or topdress application, sidedress application, spray application, soil injection or fertigation.

In case the sulfur fertilizer is provided in dry form, such as a granule, prill, pastille or pellet, it is typically applied as via broadcasting, although other fertilizers or additives may be blended with the fertilizer of the invention before its application.

In case the sulfur fertilizer is provided in the form of a powder, the method typically comprises dissolving and/or suspending, preferably dissolving the fertilizer in water before application via spray application, soil injection or fertigation. The fertilizer is typically applied in dissolved form as such, although other fertilizers or additives may be blended with the solution or suspension of the fertilizer before its application.

In case the fertilizer is provided in the form of a liquid, the method typically comprises dilution of the fertilizer with water before application via spray application, soil injection or fertigation. In case of fertigation, dilution typically happens in-situ during application by slowly injecting the liquid fertilizer into a system actively irrigating water. The fertilizer is typically applied in diluted form as such, although other fertilizers or additives may be blended with the diluted fertilizer of the invention before its application.

As will be understood by the skilled person, the fertilizer is typically applied in liquid form in case the methods or uses described herein comprise application to foliage, for example in the form of a solution which is applied via foliar spray. For the purpose of the present disclosure, the expression "liquid form" should be construed to include slurries.

In some particularly preferred variations, the methods and uses described herein are provided wherein the sulfur fertilizer is applied in liquid form and preferably the sulfur fertilizer is selected from thiosulfates as described herein elsewhere. In some particularly preferred variations the methods and uses described herein are provided wherein the sulfur fertilizer is applied in liquid form to foliage (i.e. foliar application) and preferably the sulfur fertilizer is selected from thiosulfates as described herein elsewhere.

### Examples

### Example 1 (not according to the invention): Greenhouse trial (maize)

To test the impact of sulfur fertilizers as described herein on physico-chemical and biotic soil properties like the redox potential, in comparison to other conventional sulfur fertilizers, a greenhouse experiment was conducted with three contrasting soil types. The trial was designed according to a completely randomized block design, including one experimental factor having three treatment levels and 4 replications. Per replication, 3 pots were included. All 5L pots were filled with a fixed weight of soil (i.e. 5 kg per pot) and the following three different soil types were sampled:
- type 1: clay;
- type 2: clay;
- type 3: loamy sand.
Pots were subsequently watered to field capacity. Three maize seeds were then sown in each pot and thinned to one plant per pot at two weeks after planting. The water level of each pot was then maintained at field capacity three times per week until the end of the trial.

Treatment levels included:
- 1: a control without fertilizer amendment;
- 2: a basal amendment of 0.86 g ammonium sulfate per pot; and
- 3: a basal amendment of 0.77 g of an ammonium thiosulfate solution per pot.
The sulfur applications in treatment 2 and 3 were each time applied at a sulfur application rate equivalent to 0.5 g SO₃ per pot. Fertilizers of treatment 2 and 3 were broadcast at the surface of the pots at 19, 39, and 67 days after sowing resulting in a total sulfur application rate equivalent to 1.5 g SO₃. Other nutrients like P, Ca, and K were applied at conventional rates to each pot in order to avoid any deficiency other than N or S

The ammonium thiosulfate solution of treatment 3 was Thio-Sul^{®} which is an ammonium thiosulfate solution commercially available from Tessenderlo Kerley. The ammonium thiosulfate solution of treatment 3 contains ammonium thiosulfate in an amount providing 34.6% (w/v) sulfur, equivalent to 86.3% (w/v) SO₃.

Plant growth and soil dynamics were followed up for 11 weeks after sowing and soil redox potential was measured frequently before and after fertilizer amendments according to the method described in steps 1-10 of section 3.2.1 on page 104 of Husson, Olivier, et al. "Practical improvements in soil redox potential (Eh) measurement for characterization of soil properties. Application for comparison of conventional and conservation agriculture cropping systems." Analytica chimica acta 906 (2016): 98-109.

The soil redox potential was preferably measured at a depth of 20 cm.

Soil pH was determined according to ISO 10390:2021 employing a 1:3 (volume fraction) suspension of soil in water.

The results of the trial are shown in the below table. Data are presented as means with (standard errors of the mean). For each measurement time, probabilities of F-statistics for the treatment effects are presented at the bottom. Significant differences are indicated: *, P <0.05; **, P <0.01; ***, P <0.001; ns, not significant.

**Table 1**

| | | **Soil 1** | | **Soil 2** | | **Soil 3** | |
|---|---|---|---|---|---|---|---|
| **Time of measurement** | **Fertilizer Treatment** | **pH** | **Eh** | **pH** | **Eh** | **pH** | **Eh** |
| Before any fertilizer amendment | - | 7.82 (0.05) | 543 (1.5) | 7.15 (0.03) | 560 (1.7) | 6.63 (0.01) | 584 (1.2) |

| *-----Results of one-way ANOVA-----* | | | | | | | |
|---|---|---|---|---|---|---|---|
| ***Factor: Treatment*** | | ****** | ******* | **ns** | ******* | ******* | ******* |
| 1 day after 1^{st} fertilizer amendment | 1. Control | 6.19 (0.01) b | 513 (3) a | 6.81 (0.01) a | 496 (3) a | 5.63 (0.04) b | 569 (3) a |
| | 2. Ammoniumsulfate | 6.33 (0.01) a | 453 (3) b | 6.92 (0.02) a | 480 (2) a | 5.47 (0.01) b | 543 (3) b |
| | 3. Thiosul | 6.45 (0.02) a | 340 (4) c | 6.88 (0.02) a | 352 (4) b | 6.57 (0.04) a | 394 (3) c |

### Example 2: Greenhouse trial (bell pepper)

To test the impact of thiosulfates on plant tissue redox potential, a greenhouse trial was conducted on bell pepper plants. The trial followed a randomized design, including one experimental factor having three treatment levels and 3 replications. Per replication, one suction tube was installed allowing direct sampling of the soil solution. Each suction tube was localized at 15 cm from a drip emitter and at 20 cm deep and kept under reduced pressure (and thus filled with soil solution), targeting the area were the bell pepper has a maximum root density. Fertilization was applied via fertigation.

Treatment levels included:
- 1: a control without thiosulfates in the fertigation solution;
- 2: a weekly application of 4 mmol·l⁻¹ of thiosulfates provided in the form of potassium thiosulfate and calcium thiosulfate at a 5:1,5 molar ratio of potassium to calcium;
- 3: a daily application 4 mmol·l⁻¹ of thiosulfates provided in the form of potassium thiosulfate and calcium thiosulfate at a 5:1,5 molar ratio of potassium to calcium.

The thiosulfate applications in treatments 2 and 3 were applied from a 200 liters tank filled with 40 liters of KTS^{®}, 40 liters of CaTs^{®} and 120 liters of water. KTS^{®} is a potassium thiosulfate solution commercially available from Tessenderlo Kerley containing 25% (w/w) potassium (as K₂O) and 17% (w/w) sulfur, equivalent to 42.4% (w/w) SO₃. CaTs^{®} is a calcium thiosulfate solution commercially available from Tessenderlo Kerley containing 6% (w/w) calcium and 10% (w/w) sulfur, equivalent to 25% (w/w) SO₃. The irrigation computer used this tank to inject 1,5 mmol·l⁻¹ of calcium and 5 mmol·l⁻¹ of potassium based on the programmed fertigation plan. In the control the same amount of potassium and calcium were injected with a solution of potassium and calcium nitrate. Other nutrients like N,P, Mg and the rest of Ca and K were applied at conventional rates to each block according to the farmer practice. The soil is kept at field capacity. Two tensiometers installed at two different depths are used to decide irrigation times.

The soil solution redox potential was measured according to the following method. Before sampling, the soil solution present in the syringe was ejected and fresh soil solution collected. The Eh was determined using a HACH Sension+ PH1 Portable pH/ORP Meter.

The plant tissue redox potential was measured according to the following method. Three leaves were taken from each plant below the pepper. A manual press was used to extract liquid from the leaves and the Eh was determined using a HACH Sension+ PH1 Portable pH/ORP Meter.

The measured redox potential of all replications within a treatment level was averaged.

It was found that the average soil solution redox potential (Eh) of the soils subjected to treatment 2 was decreased by 47,28 mV compared to the control after three weeks of treatment. It was further found that the average plant tissue redox potential (Eh) of the plants subjected to treatment 2 was decreased by 9,10 mV compared to the control after 8 weeks of treatment.

It was found that the average soil solution redox potential (Eh) of the soils subjected to treatment 3 was decreased by 65,32 mV compared to the control after three weeks of treatment. It was further found that the average plant tissue redox potential (Eh) of the plants subjected to treatment 3 was decreased by 42,50 mV compared to the control after 8 weeks of treatment.

It was thus found that treatment of soil via fertigation with a sulfur fertilizer according to the present invention reduces the soil redox potential and the plant tissue redox potential, and that increased doses of sulfur fertilizer result in an increased effect.

### Example 3: Greenhouse trial (Raspberry)

To test the impact of thiosulfates on plant tissue redox potential, a greenhouse trial was conducted on raspberry plants (pacific centennial variety). The trial investigated one experimental factor, replicated three times. Per replication, one suction tube was installed wherein each suction tube was filled with soil solution and localized near a drip irrigation system to target the area where the raspberry plant has a maximum root density.

Treatment levels included:
- 1: a control without thiosulfates in the fertigation solution;
- 2: application of 3 mmol l⁻¹ solution of potassium thiosulfate (KTS^{®})

The thiosulfate applications in treatment 2 were applied from a tank comprising 20 litres of KTS^{®} in 22.5 cubic meters of water. KTS^{®} is a potassium thiosulfate solution commercially available from Tessenderlo Kerley containing 25% (w/w) potassium (as K₂O) and 17% (w/w) sulfur, equivalent to 42.4% (w/w) SO₃. In the control the same amount of potassium and calcium were injected with a solution of potassium and calcium nitrate. Other nutrients like N,P, Mg and the rest of Ca and K were applied at conventional rates to each block according to the farmer practice. The soil is kept at field capacity. Two tensiometers installed at two different depths are used to decide irrigation times.

The plant tissue redox potential was measured according to the following method. Leaves were collected and the midribs and veins of the plant leaf were removed. 2.7 g of leaf tissue were subjected to a manual press to extract liquid from the leaves and the Eh was determined using a HACH Sension+ PH1 Portable pH/ORP Meter. Measurements were conducted every 5 minutes to determine the dynamic oxidation of the sample.

The measured redox potential of all replications within a treatment level was averaged. It was found that the average leaf redox potential (Eh) of the plants subjected to treatment 2 was decreased by 18 mV compared to the control after 20 minutes of treatment.

**Table 2**

| Time | | 5 mins | 10 mins | 15 mins |
|---|---|---|---|---|
| Redox Potential Eh (mV) | Control | 115 | 130 | 146 |
| | Treated sample | 98 | 114 | 106 |

The plant tissue redox potential for a daily effect on the sample was measured according to the following method. Leaves were collected and the midribs and veins of the plant leaf were removed. 1.5 g of leaf tissue were subjected to a manual press to extract liquid from the leaves and the Eh was determined using a HACH Sension+ PH1 Portable pH/ORP Meter.

It was further found that the average plant tissue redox potential (Eh) of the plants subjected to treatment 2 was decreased by 17 mV compared to the control after 24 hours of treatment. The pH decreased from 5.9 to 5.8 after 24 hours. The pH of the plant tissue was found to increase by 0.07.

### Example 4: Greenhouse trial (cucumber)

To test the impact of thiosulfates on plant tissue redox potential, a greenhouse trial was conducted on cucumber plants. The trial investigated one experimental factor, replicated three times. Per replication, one suction tube was installed wherein each suction tube was filled with soil solution and localized near a drip irrigation system to target the area where the cucumber plant has a maximum root density.

Treatment levels included:
- 1: a control without thiosulfates in the fertigation solution;
- 2: application of calcium thiosulfate (CaTs^{®}) solution

The thiosulfate applications in treatment 2 involved applying 5L/ha CaTs^{®} then 8 days later applying a 10L/ha CaTs^{®} solution. CaTs^{®} is a calcium thiosulfate solution commercially available from Tessenderlo Kerley containing 6% (w/w) calcium and 10% (w/w) sulfur, equivalent to 25% (w/w) SO₃. The irrigation computer used this tank to inject 1,5 mmol·l⁻¹ of calcium based on the programmed fertigation plan. In the control the same amount of calcium was injected with a solution of potassium and calcium nitrate. Other nutrients like N,P, Mg and the rest of Ca and K were applied at conventional rates to each block according to the farmer practice. The soil is kept at field capacity. Two tensiometers installed at two different depths are used to decide irrigation times.

The plant tissue redox potential was measured according to the following method. Leaves were collected from each plant. A manual press was used to extract liquid from the leaves and the Eh was determined using a HACH Sension+ PH1 Portable pH/ORP Meter.

The measured redox potential of all replications within a treatment level was averaged.

**Table 3**

| Sample | Redox potential (mV) | pH |
|---|---|---|
| Leaf (before treatment 1) | 272 | 7.55 |
| Leaf (before treatment 2) | 281 | 7.26 |
| Leaf (after treatment 1) | 325 | 7.40 |
| Leaf (after treatment 2) | 240 | 7.53 |

It was found that the average plant tissue redox potential (Eh) of the plants subjected to treatment 2 was decreased by 40 mV compared to the plant tissue prior to treatment 2 after 8 days treatment. The pH of the plant tissue was found to increase by 0.27.

It was found that the average plant tissue redox potential (Eh) of the plants subjected to treatment 2 was decreased by 85 mV compared to the control after 1 hour of treatment.

### Example 5: Greenhouse trial (Cucumber)

To test the impact of thiosulfates on plant tissue redox potential, a greenhouse trial was conducted on cucumber plants. The trial investigated one experimental factor, replicated three times. Per replication, fertilizer was sprayed directly onto the leaves (i.e. through foliar delivery).

Treatment levels included:
- 1: a control treatment of just water;
- 2: application of calcium thiosulfate (CaTs^{®}) solution

The thiosulfate applications in treatment 2 involved applying 8L/ha CaTs^{®} at a 2 vol% concentration (8L CaTs^{®} in 400L water). CaTs^{®} is a calcium thiosulfate solution commercially available from Tessenderlo Kerley containing 6% (w/w) calcium and 10% (w/w) sulfur, equivalent to 25% (w/w) SO₃. In the control treatment 1 regular water was sprayed. No other fertilizers were applied.

The plant tissue redox potential was measured according to the following method. Leaves were collected from 3 plants in the same plot and rinsed with water and dried. A manual press was used to extract liquid from the leaves and the Eh was determined using a HACH Sension+ PH1 Portable pH/ORP Meter.

The measured redox potential of all replications within a treatment level was averaged.

**Table 4**

| Sample | Redox potential (mV) | pH |
|---|---|---|
| Leaf (before treatment 1) | 162 | 7.36 |
| Leaf (before treatment 2) | 171 | 7.09 |
| Leaf (after treatment 1) | 152 | 7.48 |
| Leaf (after treatment 2) | 103 | 7.36 |

It was found that the average plant tissue redox potential (Eh) of the plants subjected to treatment 1 was decreased by 10 mV compared to the control after 1 hour of treatment. The pH of the plant tissue was found to increase by 0.11.

It was found that the average plant tissue redox potential (Eh) of the plants subjected to treatment 2 was decreased by 68 mV compared to the plant tissue prior to treatment 2 after 1 hour of treatment. The pH of the plant tissue was found to increase by 0.26.

It was found that the average plant tissue redox potential (Eh) of the plants subjected to treatment 2 was decreased by 49 mV compared to the control after 1 hour of treatment.

## Claims

1. The use of a sulfur fertilizer selected from the group consisting of thiosulfates, polysulfides, (bi)sulfides, (bi)sulfites, metabisulfites, dithionites, elemental sulfur and combinations thereof for decreasing the redox potential of plant tissue, preferably comprising application of the sulfur fertilizer to soil and/or foliage.

2. The use of claim 1 which is for decreasing the redox potential of plant tissue by at least 20 mV, preferably by at least 40 mV.

3. The use of any one of claims claim 1-2 which is for decreasing the redox potential of plant tissue and which comprises application of the sulfur fertilizer to foliage.

4. The use of any one of the previous claims which is for decreasing the redox potential of plant tissue, wherein the plant leaf tissue pe + pH is more than 10.5 before application of the sulfur fertilizer.

5. The use of any one of the previous claims which is for decreasing the redox potential of plant tissue, wherein the plant leaf tissue pe + pH is within the range of 7-10.5 after application of the sulfur fertilizer when determined after application of the sulfur fertilizer.

6. The use according to any one of the previous claims wherein the soil has a redox potential before application of the sulfur fertilizer of more than 400 mV, preferably of more than 500 mV, more preferably of more than 600 mV.

7. The use according to any one of the previous claims wherein the soil is selected from Histosols, Anthrosols, Technosols, Leptosols, Solonetz, Vertisols, Solonchacks, Andosols, Podsols, Plinthosols, Nitisols, Ferralsols, Chernozems, Kastanozems, Phaeozems, Umbrisols, Durisols, Gypsisols, Calcisols, Retisols, Acrisols, Lixisols, Alisols, Luvisols, Cambisols, Arenosols, Fluvisols or Regosols according to WRB classification system, preferably selected from Solonchacks, Andosols, Podsols, Nitisols, Ferralsols, Gyspisols, Calcisols, Acrisols, Lixisols, Alisols, Luvisols, Cambisols or Arenosols according to the WRB classification system.

8. The use according to any one of the previous claims wherein the sulfur fertilizer is selected from thiosulfates.

9. The use according to claim 8, wherein the thiosulfates are selected from calcium thiosulfate, potassium thiosulfate, ammonium thiosulfate and combinations thereof.

10. The use according claim 9, wherein the thiosulfates are selected from potassium thiosulfate or ammonium thiosulfate.

## Patentansprüche

1. Verwendung eines Schwefeldüngemittels, ausgewählt aus der Gruppe bestehend aus Thiosulfaten, Polysulfiden, (Bi)sulfiden, (Bi)sulfiten, Metabisulfiten, Dithioniten, elementarem Schwefel und Kombinationen dieser, zur Verringerung des Redoxpotentials von Pflanzengewebe, vorzugsweise umfassend das Aufbringen des Schwefeldüngemittels auf Boden und/oder Blätter.

2. Verwendung nach Anspruch 1, die darauf abzielt, das Redoxpotenzial von Pflanzengewebe um mindestens 20 mV, vorzugsweise um mindestens 40 mV, zu senken.

3. Verwendung nach einem der Ansprüche 1-2, die darauf abzielt, das Redoxpotenzial von Pflanzengewebe zu senken und die die Anwendung des Schwefeldüngemittels auf Blättern umfasst.

4. Verwendung nach einem der vorherigen Ansprüche, die darauf abzielt, das Redoxpotenzial von Pflanzengewebe zu senken, wobei das Pflanzenblattgewebe pe + pH vor der Anwendung des Schwefeldüngemittels mehr als 10,5 beträgt.

5. Verwendung nach einem der vorherigen Ansprüche, die darauf abzielt, das Redoxpotenzial von Pflanzengewebe zu senken, wobei das Pflanzenblattgewebe pe + pH nach der Anwendung des Schwefeldüngemittels im Bereich von 7-10,5 liegt, wenn es nach der Anwendung des Schwefeldüngemittels bestimmt wird.

6. Verwendung nach einem der vorherigen Ansprüche, wobei der Boden vor der Anwendung des Schwefeldüngemittels ein Redoxpotenzial von mehr als 400 mV, vorzugsweise von mehr als 500 mV, noch bevorzugter von mehr als 600 mV aufweist.

7. Verwendung nach einem der vorherigen Ansprüche, wobei der Boden ausgewählt ist aus Histosolen, Anthrosolen, Technosolen, Leptosolen, Solonetzen, Vertisolen, Solonchacks, Andosolen, Podsolen, Plinthosolen, Nitisolen, Ferralsolen, Tschernosemen, Kastanozemen, Phaeozemen, Umbrisolen, Durisolen, Gypsisolen, Calcisolen, Retisolen, Acrisolen, Lixisolen, Alisolen, Luvisolen, Cambisolen, Arenosolen, Fluvisolen oder Regosolen gemäß dem WRB-Klassifizierungssystem, vorzugsweise ausgewählt aus Solonchacks, Andosolen, Podsolen, Nitisolen, Ferralsolen, Gyspisolen, Calcisolen, Acrisolen, Lixisolen, Alisolen, Luvisolen, Cambisolen oder Arenosolen gemäß dem WRB-Klassifizierungssystem.

8. Verwendung nach einem der vorherigen Ansprüche, wobei das Schwefeldüngemittel aus Thiosulfaten ausgewählt ist.

9. Verwendung nach Anspruch 8, wobei die Thiosulfate ausgewählt sind aus Calciumthiosulfat, Kaliumthiosulfat, Ammoniumthiosulfat und Kombinationen dieser.

10. Verwendung nach Anspruch 9, wobei die Thiosulfate ausgewählt sind aus Kaliumthiosulfat oder Ammoniumthiosulfat.

## Revendications

1. Utilisation d'un engrais soufré choisi parmi le groupe constitué de thiosulfates, de polysulfures, de (bi)sulfures, de (bi)sulfites, de métabisulfites, de dithionites, de soufre élémentaire et de combinaisons de ceux-ci pour diminuer le potentiel redox des tissus végétaux, comprenant de préférence l'application de l'engrais soufré au sol et/ou au feuillage.

2. Utilisation selon la revendication 1, qui consiste à diminuer le potentiel redox des tissus végétaux d'au moins 20 mV, de préférence d'au moins 40 mV.

3. Utilisation selon l'une quelconque des revendications 1 à 2, qui consiste à diminuer le potentiel redox des tissus végétaux et qui comprend l'application de l'engrais soufré sur le feuillage.

4. Utilisation selon l'une quelconque des revendications précédentes, qui consiste à diminuer le potentiel redox des tissus végétaux, où le pe + pH des tissus foliaires végétaux est supérieur à 10,5 avant l'application de l'engrais soufré.

5. Utilisation selon l'une quelconque des revendications précédentes, qui consiste à diminuer le potentiel redox des tissus végétaux, où le pe + pH des tissus foliaires végétaux se situe dans la plage de 7 à 10,5 après l'application de l'engrais soufré, lorsque déterminé après l'application de l'engrais soufré.

6. Utilisation selon l'une quelconque des revendications précédentes, où le sol a un potentiel redox avant l'application de l'engrais soufré supérieur à 400 mV, de préférence supérieur à 500 mV, préférablement supérieur à 600 mV.

7. Utilisation selon l'une quelconque des revendications précédentes, où le sol est choisi parmi les histosols, les anthrosols, les technosols, les leptosols, le solonetz, les vertisols, les solonchaks, les andosols, les podsols, les plinthosols, les nitisols, les ferralsols, les chernozems, les kastanozems, les phaeozems, les umbrisols, les durisols, les gypsisols, les calcisols, les retisols, les acrisols, les lixisols, les alisols, les luvisols, les cambisols, les arénosols, les fluvisols ou les régosols selon le système de classification WRB, de préférence choisi parmi les solonchaks, les andosols, les podsols, les nitisols, les ferralsols, les gyspisols, les calcisols, les acrisols, les lixisols, les alisols, les luvisols, les cambisols ou les arénosols selon le système de classification WRB.

8. Utilisation selon l'une quelconque des revendications précédentes, où l'engrais soufré est choisi parmi les thiosulfates.

9. Utilisation selon la revendication 8, où les thiosulfates sont choisis parmi le thiosulfate de calcium, le thiosulfate de potassium, le thiosulfate d'ammonium et des combinaisons de ceux-ci.

10. Utilisation selon la revendication 9, où les thiosulfates sont choisis parmi le thiosulfate de potassium ou le thiosulfate d'ammonium.
